# EUROPEAN PATENT APPLICATION

(11) **EP 2 178 220 A1**
(43) Date of publication of application: **21.04.2010**
(21) Application number: 08018335.3
(22) Date of filing: 20.10.2008
(51) Int. Cl.: H04B 1/69

(54) **Device and method for impulse transmission and reception coping with multipath propagation, different types of interference and low SNR**

(71) Applicant: Universität Ulm, 89081 Ulm (DE)
(72) Inventor: Schumacher, Hermann, 89134 Blaustein (DE); Leib, Mario, 88487 Mietingen-Baltringen (DE); Schleicher, Bernd, 80687 München (DE); Menzel, Wolfgang, 89081 Ulm (DE); Thiasiriphet, Thanawat, 89075 Ulm (DE); Lindner, Jürgen, 89155 Erbach (DE)
(74) Representative: Pfenning, Meinig & Partner GbR

(57) **Abstract**

A transmitter for generating a pulse train and for transmitting said pulse train, the transmitter being adapted
to generate (1) the pulse train,
to modulate (2) the pulse train with respect to the amplitude and/or position of its individual impulses,
to spread (3), preferably to multiply, the pulse train with a predefined spreading sequence (3a),
to shape (4) the individual impulses of the pulse train so that they have a frequency spectrum in a predefined frequency range and/or a frequency spectrum fulfilling a predefined spectral mask, and
to transmit (5) the generated, modulated, spread and shaped pulse train to a receiver,
wherein the transmitter is adapted to generate and to transmit, seen in time domain, the individual impulses of the pulse train with an impulse duration which is shorter than the chip interval, the chip interval being the reciprocal of the chip rate, the latter being the number of impulses per second in the pulse train.

## Description

The present invention relates to a transmitter for generating pulse trains and for transmitting those pulse trains to a corresponding receiver adapted to receive those pulse trains, a transmission and reception system comprising at least one such transmitter and at least one such receiver and a corresponding transmitting and receiving method.

Advantageously, the devices and/or method of the present invention can be used for impulse UWB transmission and reception, i.e. in the field of ultra-wide band transmission and reception.

The first definition of ultra-wide band systems was given by the Federal Communication Commission (FCC) in the United States in 2002 as a system using signals that have a fractional bandwidth greater than 20% or an absolute bandwidth of more than 500 MHz (see "Revision of Part 15 of the Commission's Rules Regarding Ultra-Wide Band Transmission Systems", Report and Order in ET Docket No. 98-153, adopted February 14, 2002, released July 15, 2002). The UWB systems can be divided into two groups, i.e. impulse UWB (hereinafter also abbreviated as I-UWB) and a wide-band version of OFDM (orthogonal frequency division multiplexing).

Therein, I-UWB systems use short impulses for communication. Because a base band signal is used, no mixers are required at the transmitter or at the receiver, which allows for a low realization complexity. Furthermore, I-UWB systems such as the transmitter and receiver of the present invention, can be realized in purely analog hardware, i.e. without wideband analog-digital conversion. Finally, the use of I-UWB is not limited to communication; this means that the transmitters and receivers according to the present invention can also be used in a radar system (in which they provide a good spatial resolution), for localization purposes and/or for sensing applications.

Already well-known state of the art modulation techniques on the transmission side are pulse position modulation techniques (hereinafter: PPM techniques), pulse amplitude modulation techniques (hereinafter: PAM techniques) such as e.g. on/off keying, and transmitted reference techniques (hereinafter: TR techniques).

In the state of the art, it is common to consider, on the reception side, two different approaches: correlation detection and energy detection. Both of these two techniques have their advantages and disadvantages: if, on the reception side, the reference waveform is perfectly known, correlation detection provides a better performance than energy detection. If this is, however, not the case, energy detection is often preferred; this is also due to the fact that, because of complexity, digital processing of the received signal is usually avoided, hence channel estimation is avoided too. Another reason that makes energy detection attractive for the reception side is a certain robustness with respect to synchronization accuracy. The autocorrelation of the impulse used in the I-UWB reception is very short, thus correlation detection can be highly degraded by a timing misalignment. To achieve a very precise timing recovery in the correlation detection, a long acquisition period and complex algorithms are needed. For energy detection, the required time accuracy is less demanding.

A problem of the energy detection is the noise enhancement from squaring and high sensitivity to narrow band interferers. Due to the restricted allowed transmission power intensities of I-UWB systems, the transmit power density of the I-UWB signal is below the noise floor and the received signal can be highly attenuated due to larger distances between the transmitter and the receiver. The signal-to-noise ratio (SNR) and the signal-to-interference ratio (SIR) at the receiver cannot be improved by increasing the transmit power due to the limited transmit power allowed and due to the mask for the spectral power density.

Additionally in an I-UWB system multiple transmitters may be used. Due to the use of the squaring device in the energy detection, it is difficult to distinguish between signals from different users that transmit at the same time. Therefore, especially I-UWB with energy detection has up to now limited applications despite of its advantages in many respects.

It is therefore an object of the present invention to provide a transmitter, a receiver, a transmission and reception system and a corresponding transmitting and receiving method which allow to improve the handling of multipath propagation, to decrease the sensitivity for narrow-band interference and for interference resulting from non-desired transmitters and to improve an I-UWB transmission and reception in multi-sensor environments and in low SNR and/or low SIR environments.

The abovementioned object of the present invention is solved by a transmitter according to claim 1, by a receiver according to claim 6, by a transmission and reception system according to claim 14 and by a transmitting and receiving method according to claim 16. Advantageous embodiments of the corresponding devices and of the corresponding method are described in the dependent claims.

Subsequently, the present invention will be described, first in more general form, then in a detailed example embodiment. The specific combinations of features disclosed in the subsequent description, especially in the description of the detailed example embodiment, do not have to be realized in exactly the exemplified form described hereinafter, but can also be realized, based on the common knowledge of the one skilled and within the scope of the appended claims, in different forms. Especially, one specific aspect described in detail in the exemplified embodiment can also be realized independently of the other specific aspects described in this embodiment.

A transmitter for generation a pulse train and for transmitting the pulse train is, according to the present invention, adapted to generate the pulse train, to modulate it with respect to the amplitude and/or position of the individual impulses of the pulse train, to spread the pulse train with a predefined spreading sequence, to shape the individual impulses of the pulse train such that these impulses have a frequency spectrum in a predefined frequency range (especially in accordance with a predefined spectral mask such as a UWB spectral mask) and to finally transmit the pulse train to a receiver. Therein, seen in the time domain, the individual impulses of the pulse train are generated and transmitted with an impulse duration which is shorter than the chip interval (the chip interval is the reciprocal of the chip rate, which is the number of impulses per second in the pulse train).

In order to perform this, the transmitter can comprise different subunits such as an impulse generator and modulator, a spreading device, an impulse shaper and a transmitting unit (antenna).

As modulation techniques, pulse amplitude modulation PAM, pulse position modulation PPM or transmitted reference TR techniques can be used for the pulse train. As will be described later, a transmitter according to the invention can unify conventional PAM, PPM and/or TR techniques with conventional direct sequence spread spectrum modulation techniques of the pulse train. Therein, especially binary PPM (hereinafter: 2-PPM) or in general also M-ary PPM (hereinafter: M-PPM with M ≥ 2) techniques can be used.

On the reception side, a receiver according to the present invention is adapted to receive a corresponding pulse train, to de-spread it with a predefined spreading sequence, to delay and to sum up multiple individual channel impulse responses of the received and de-spread pulse train (i.e. the consecutive individual impulses are delayed such that these individual impulses can be superimposed in a constructive manner), and finally to detect the signal resulting from the summing up of the individual channel impulse responses. The individual impulses transmitted from the transmitter become channel impulse responses once they pass through the channel; for simplification, nevertheless, in the following description the expression "impulse" instead of "impulse response of the channel" is used also on the reception side.

This detection can be performed with an energy detector or with a correlation detector whose details are, in principle, known to the one skilled.

For the delaying and the summing up of the individual impulses, i.e. the impulse responses of the channel, of a data symbol waveform (i.e. over a time interval corresponding to the duration of a data symbol waveform) the receiver can comprise a comb filter. This comb filter may be realized by a combination of a delay feedback loop with an adder. Advantageously, the delay feedback loop and the adder (i.e. the comb filter) are realized such that a loop gain of one (or smaller than one, but as close as possible to one) and/or a loop delay which equals the duration of one chip interval are attained.

The comb filter, i.e. the delay feedback loop and the adder, can be adapted to start and/or to stop a loop at the end or at the beginning of a data symbol interval. This can be realized with help of a clock in the receiver which is synchronized with the data symbol intervals; preferably the starting and/or the stopping is accomplished by blocking a feedback signal in the first chip interval of each data symbol interval.

The receiver may comprise a receiving unit in form of an antenna, a subsequent spreading unit, a subsequent comb filter as described above and a subsequent detecting unit (realized e.g. as an energy detector or a correlation detector). As is subsequently described in further detail, an energy detector may comprise a squaring unit, one or more integrators and a deciding unit. A low noise amplifier can be connected between the receiving unit and the spreading unit.

Therefore, in order to improve the performance of the transmitter and of the receiver, in the present invention special modulation techniques are used in conjunction with the I-UWB transmission. Especially, PPM modulation techniques such as, for example, 2-PPM or M-PPM modulation techniques with M > 2 can be used. However, also a pulse amplitude technique PAM can be used instead of PPM. It is also possible to use transmitted reference techniques TR. The modulation techniques are combined with a special kind of spread spectrum technique in order to cope with narrow-band interference and other I-UWB transmissions. Especially, a I-UWB transmission with 2-PPM or M-PPM can be realized in combination with spreading using channel impulse responses as chips. By taking proper sets of spreading sequences, the present invention allows for the possibility of multi-user/multi-sensor systems: therein, the selection of the spreading sequence set is done in a similar way as for a typical DS-CDMA system.

On the reception side, e.g. with a comb filter, noise and narrow-band interference are suppressed; direct sequence remodulation (de-spreading) followed by this comb filter can be used to improve the SNR and the SIR. In the receiver, energy detection can be used (especially in a communication receiver) in combination with the comb filter and the direct sequence remodulation to recover the data bits. However, in the receiver, also a correlation detection can be used instead of the energy detection. The SNR and SIR improved channel impulse responses at the output of the comb filter can then be used for imaging or for sensing purposes.

In the present invention, PPM is the preferred modulation technique because no threshold calculation is required in the receiver. The approach to PPM according to the present invention is to include the expected multipath propagation on the channel. This is done by generating and transmitting the individual impulses of the pulse trains with an impulse duration that is shorter than the chip interval. The transmitter transmits a short impulse in a given time interval T_{c} (chip interval), which can be selected to be, for 2-PPM (and also for TR), at least twice the maximum multipath propagation delay. For M-PPM, the chip interval (chip size) can be selected to be at least M times the maximum multipath propagation delay (for PAM it should be at least equal to this delay). This maximum duration to be expected for the multipath propagation must be known in advance, i.e. it is needed for the system design (the maximum duration of the channel impulse response has to be estimated in advance; it is system design parameter).

The system performance degrades if the chip period is too small compared with the maximum duration of the overall impulse response (channel and all pulse shaping elements included). For a binary transmission (2-PPM), the individual shift of the impulses within the time interval T_{c} determines the bit. A shift to the left half of the interval equals bit "1", a shift to the right half of the interval equals bit "0".

An advantageous, special kind of spread spectrum technique of the present invention can be described as a direct sequence pulse position modulation. The basic waveform (or the data symbol waveform) is divided into chips, as is the case for direct sequence spread spectrum techniques known from the prior art. At the transmitter, the waveform consists of a number (e.g. 63) of consecutive UWB impulses. The individual impulses are shifted in each chip interval according to the data symbol to be transmitted, e.g. to the left or right half of each chip interval for a binary transmission 2-PPM. Additionally, each chip interval (i.e. the individual impulse of the chip interval) is weighted by a value of a spreading sequence, i.e. multiplied with either +1 or -1.

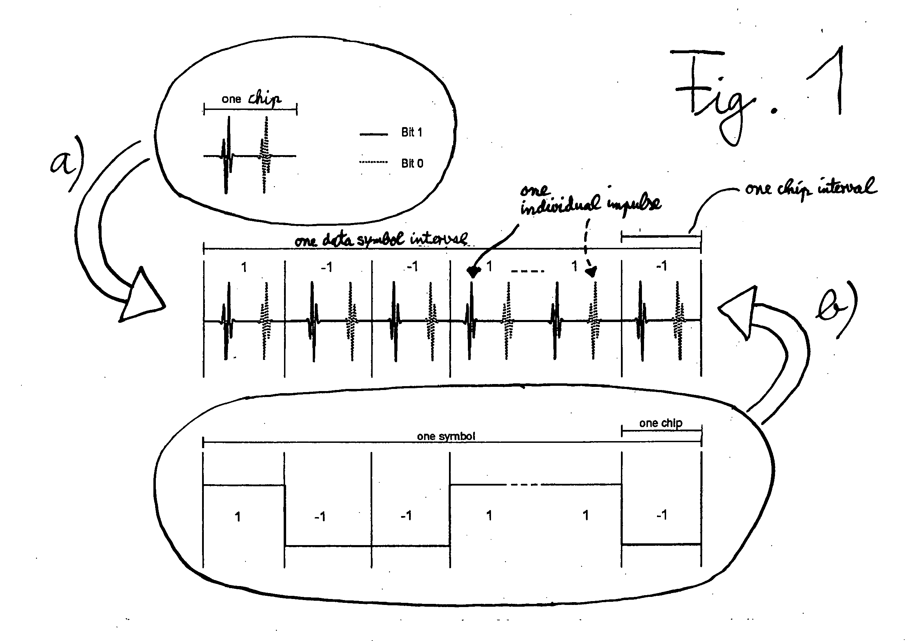

The aforementioned principle of the present invention is depicted in Fig. 1. The described realization possibility of the invention based on a combination of 2-PPM with a direct sequence spread spectrum technique is shown in the center of the Figure. (a) and (b) symbolize the combination of, on the one hand, a conventional pulse position modulation aspect in which the time shift of the individual impulses is dependent upon the bit value to be transmitted (see (a)), and of, on the other hand, a direct sequence signal aspect with a rectangular basic waveform (see (b)). This results in a data symbol waveform to be transmitted with a duration of one data symbol interval as shown in the center of the Figure.

At the receiver, this leads to a received waveform for each data symbol that is similar to the transmitted one. The difference is that the individual impulses in the chip intervals are replaced by the current impulse response of the multipath propagation channel (due to multiple reflections on the channel the chip, corresponding to one impulse at the transmitter, becomes a channel impulse response in the input signal of the receiver). Additionally, noise and/or narrow-band interference is present in the received signal. Also, the correlation properties of the spreading sequence play an important role, especially if more transmitters are active at the same time and more different spreading sequences have to be considered.

The transmitter concept and the receiver concept of the present invention are now described in detailed embodiments.
- Fig. 1: shows the principle of the present transmission concept in an example.
- Fig. 2: shows a possible transmitter ac- cording to the invention.
- Fig. 3: shows a possible receiver according to the invention.
- Figs. 4 and 5: illustrate one possible reception concept of the present invention.
- Fig. 6: illustrates the signals at the input and the output terminal of a comb filter used in the embodiment of Fig. 3.
- Fig. 7: shows a comparison of bit error ratios (BER).
- Fig. 8: shows another example of input and output signals of a comb filter.
- Figs. 9 and 10: show other examples of bit error ratio comparisons.

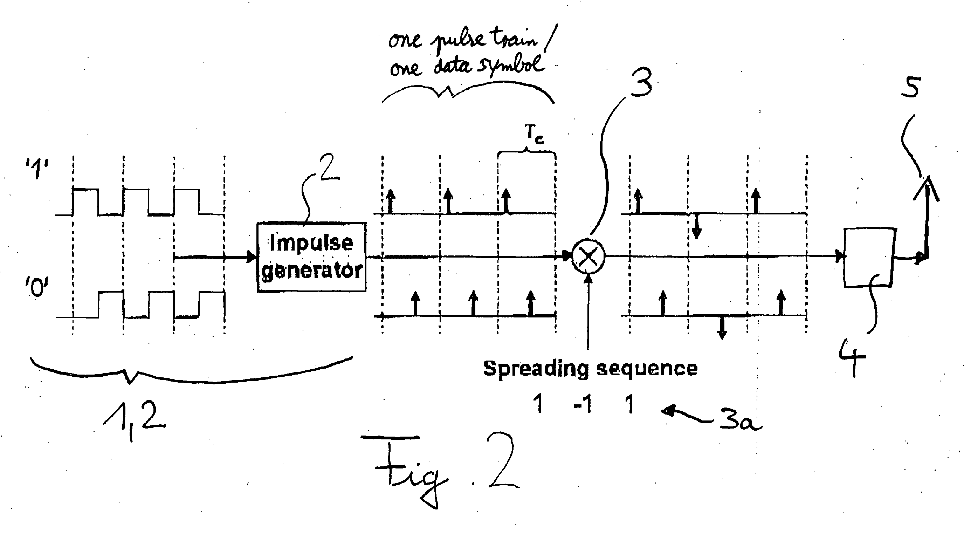

Fig. 2 discloses a possible transmitter according to the present invention. The transmitter comprises an impulse generator and modulator 1, 2, which generates a pulse train and modulates said pulse train with respect to the position of its individual impulses. In this case, a 2-PPM technique is used with a first waveform for bit "1" (upper row of the Figure) and a second waveform for bit "0" (lower row), wherein both waveforms only differ in a time shift of their individual impulses to the left half of each chip interval (upper row) and to the right half of each chip interval (lower row). Controlled by a microcontroller, the impulse generator part 2 produces one UWB impulse every rising edge of its input signal (change from 0 to 1). As already said, a binary transmission scheme 2-PPM with two waveforms that differ only in their mutual time shift (one waveform representing a "1" bit and the other waveform, as a shifted version of the first waveform, representing a "0" bit) is assumed in this exemplified transmitter. For the information bit to be transmitted being a "1", the upper pulse train is transmitted, otherwise the lower one is transmitted. Therefore, each information bit corresponds to one of those two pulse trains (or two waveforms), which in this example consist of N = 3 individual impulses (of course, N may also be larger than 3). With respect to the "1" waveform, the "0" waveform is shifted in time by half of the chip interval T_{c}.

As a result, at the output of the impulse generator and modulator 1, 2, two possible impulse trains (or two different waveforms) occur. Here, each consists of three Dirac delta impulses.

Connected to the output side of the impulse generator and modulator 1, 2 is a spreading device 3 in form of a multiplier that multiplies the pulse train output from the impulse generator and modulator 1, 2 with a predefined spreading sequence 3a, i.e. weights each Dirac delta impulse with either +1 or -1 according to the corresponding value within the spreading sequence 3a.

Connected to the output side of the spreading device 3 is an impulse shaper 4, which shapes the individual impulses of the pulse train output by the spreading device 3 so that they have a frequency spectrum fulfilling a predefined UWB spectral mask: each Dirac delta impulse is transformed into an impulse with a spectrum fulfilling this mask.

The so shaped pulse train is then finally fed to the transmit antenna 5 connected to the output side of the impulse shaper 4.

The essential aspect of the transmitter shown in Fig. 2 is that the UWB impulses leaving the transmit antenna 5 have a duration that is shorter than the duration of the chip interval T_{c}. This allows to cope with multipath propagation: Due to multipath propagation on the transmission channel, a new overall impulse response will be present on the receiving side (see below). This overall impulse response may fill up half of the chip interval in the received signal.

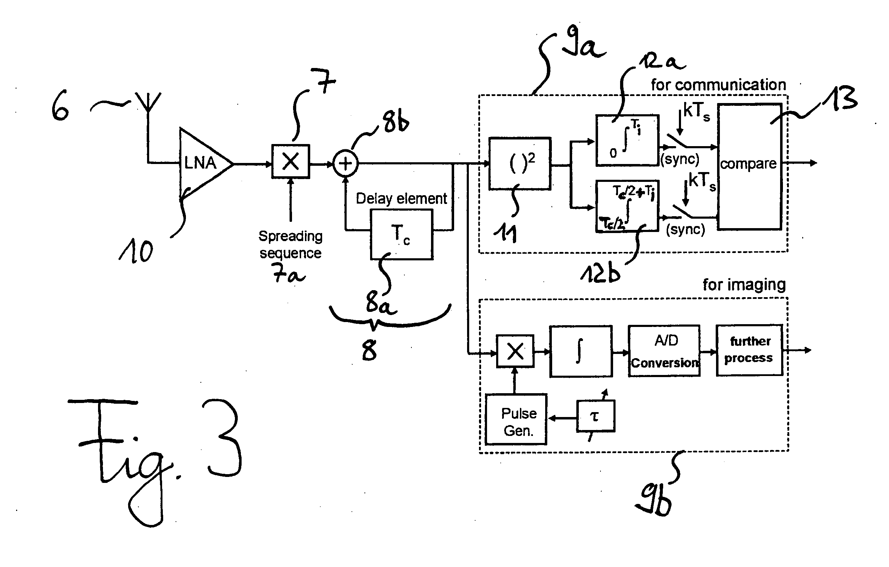

Fig. 3 discloses a possible embodiment of a receiver according to the present invention. The pulse trains transmitted by the transmitter are received by an antenna 6 to which a low-noise amplifier 10 is connected. Connected to the output side of the low-noise amplifier is a spreading unit 7 that spreads the amplified pulse train with a predefined spreading sequence 7a that is the same spreading sequence as is used by the transmitter.

Connected to the output side of the spreading unit 7 is a comb filter 8 that comprises a delay feedback loop 8a delaying with a time interval of duration T_{c} and an adder 8b for delaying and summing up the multiple individual impulses of the de-spread pulse train.

Connected to the output side of the comb filter 8 are two different detecting units, firstly an energy detector 9a, which is used for further communication purposes and, in parallel to the energy detector 9a, secondly also a correlation detector 9b, which is used for further imaging purposes.

The energy detector 9a comprises a squaring unit 11, in which the output signal of the comb filter 8 is squared, and two integrators 12a, 12b that are connected in parallel to the output side of the squaring unit 11. Each of said integrators 12a, 12b is used for integrating the output signal of the squaring unit 11 over a defined subinterval of each chip interval T_{c} (here, due to 2-PPM, two subintervals are used, therefore two integrators are needed). The integrated signals of the integrators 12a, 12b are then compared in the deciding unit 13, which selects the higher signal level corresponding to the bit that was transmitted by the corresponding waveform.

The interior of the correlation detector 9b is well known to the one skilled, so a detailed description is omitted here.

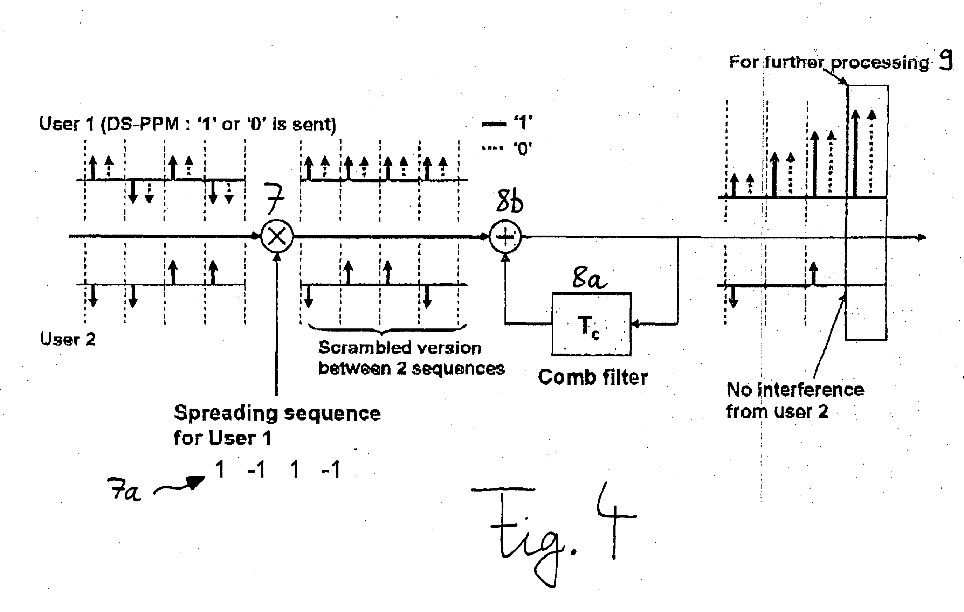

The reception is now described with respect to Fig. 3 and Fig. 4; in Fig. 4, for illustration purposes, Dirac delta impulses are used instead of the bandlimited impulses produced by the pulse shaping in the transmitter. After low-noise amplification in the low-noise amplifier 10, the received pulse train, i.e. the received data symbol (bit) waveform is multiplied in each chip interval with the corresponding spreading sequence value that has been used in the transmitter. The receiver therefore has to know the spreading sequence 3a that has been used in the transmitter in order to use this sequence as the spreading sequence 7a on the reception side as well (only for illustration purposes, the spreading sequence shown in Fig. 2 does not correspond to the spreading sequence in Fig. 4).

Since it is assumed that many transmitters (or many users) can be active at the same time, the spreading sequences for all transmitters/users must be different. So, at the input of the receiver, a sum of the signals from all active transmitters in a distance from the receiver that allows receiving their signals is received. In Fig. 4, two of these users (user 1 in the upper row and user 2 in the lower row) are illustrated, each contribution to the sum of the individually received signals, i.e. to the input signal as a whole, being shown separately.

If the spreading sequence 7a used in the receiver corresponds to the signal of a transmitter from which the signals shall be received ("wanted user", here: user 1), a series of individual impulses with weighting factor 1 for the wanted user is attained. On the other hand, a scrambled version given by the product of the spreading sequence in the receiver and the (different) spreading sequence used in an unwanted transmitter (in this case, user 2) is attained in case of other transmitters.

Behind the spreading unit 7, the de-spread pulse train is then further processed with the comb filter 8, in which all chip waveforms within a data symbol waveform are added up. As can be seen in Fig. 4, the comb filter 8 sums up all N (in Fig. 4: N = 4) individual impulses of one waveform. This can also be seen as an averaging which is one part in a correlation process. As a result, after N chip intervals or chip periods, respectively, the output signal of the comb filter 8 is increased by a factor of N compared with the amplitude of the wanted user (user 1) at the input of the comb filter 8. If the spreading sequences of the other users (user 2) are orthogonal to the sequence of the wanted user, their contribution to the total sum will be zero (see Fig. 4). This corresponds directly to a cross correlation.

In the described example, the comb filter 8 is an analog delay feedback loop with loop gain 1, in which the loop delay is set equal to the duration of a chip interval. The loop is stopped and started again at the ends or beginnings of the symbol intervals. The loop starting and stopping can be realized with the help of a clock (not shown) of the comb filter that is synchronized with the symbol interval (N chip intervals) at the transmitter. Stopping and starting can be done by blocking the feedback signal in the first chip interval of every data symbol interval.

At the end of each symbol interval the sum of all channel impulse responses results in a SNR-gain of 10 log(N) dB and also in an SIR improvement. N is the number of chips per (data) symbol waveform (or symbol duration).

After the N summations, the final output of the comb filter 8 ("for further processing" in Fig. 4) can be used as the input signal of the energy detector 9a (see Fig. 3). Alternatively (as also shown in Fig. 3), this output can also be used as an input signal of the correlation detector 9b.

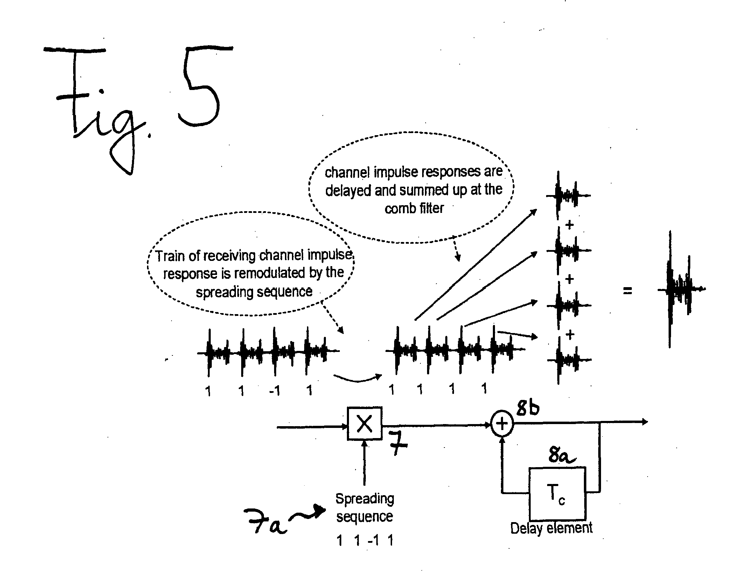

The first waveform (corresponding to bit "1") is shown in continuous lines in Fig. 4, the second waveform (corresponding to bit "0") of the described 2-PPM transmission is shown by dashed lines. For the second waveform, the final impulse after N summations comes half a chip interval later; thus, with the aforementioned usage of two integrators 12a, 12b integrating over adjacent, different time intervals, these two waveforms can be distinguished: both values at the output of the energy detector are compared, the bigger one corresponds to the bit that was transmitted by the corresponding waveform. Fig. 5 illustrates the summing up of the individual impulses of a pulse train corresponding to a data symbol waveform in detail.

The signal at the output of the comb filter 8 can - see Fig. 3 - be used for data transmission or communication (with help of the energy detector 9a), but it can also be used as an input for an imaging system (with help of the correlation detector 9b). The latter is because the channel impulse response contains also all information a radar sensor can provide.

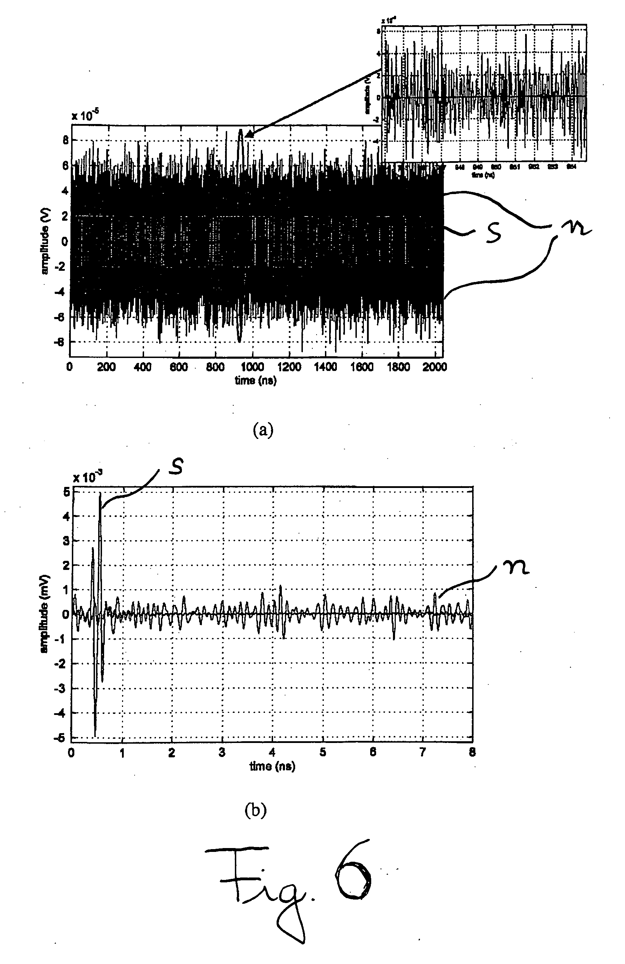

As illustrated in Figs. 6-10, the advantages of the present invention, especially the usage of the energy detection subsequent to the described de-spreading, delaying and summing up become obvious in a real scenario, where multipath propagation, additive noise, narrow-band interference and possible synchronization errors are present. The synchronization error can occur if the reference spreading sequence used in the receiver is a little bit shifted in time with respect to the sequence used in the transmitter.

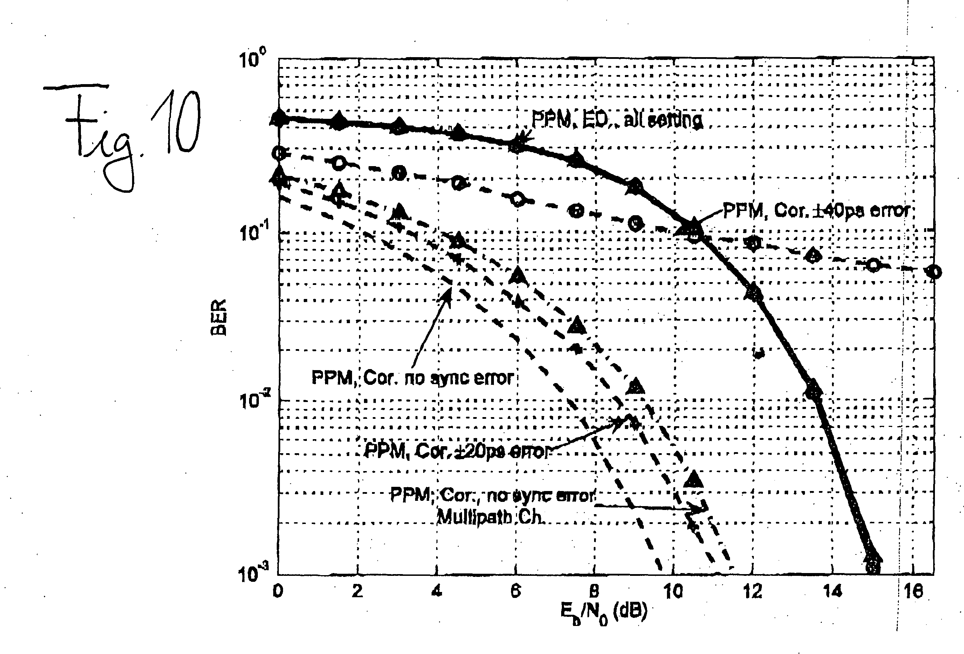

Especially, the energy detection performance is much less sensitive to timing errors compared to correlation detection, which can be seen by the bit error ratio BER performance of the correlation detection and the energy detection in Fig. 10: a performance degradation of the correlation detector can be seen in the case where timing errors are present. If multipath propagation is present, the performance of the correlation detection also gets worse for the case where the receiver does not know the channel impulse response. In contrast to this, energy detection 9a does not need any channel knowledge (this is illustrated in Fig. 10 because all settings lead to the same BER curve).

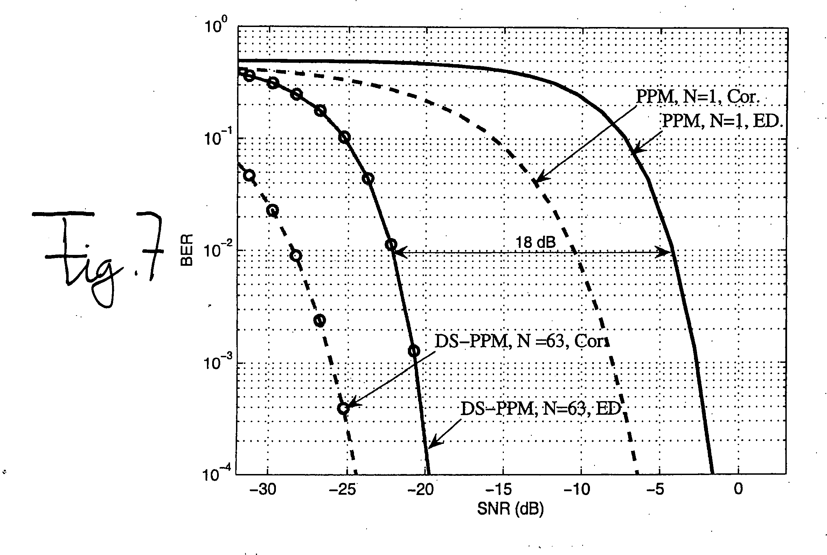

Fig. 6 illustrates the effect of the comb filter 8 by showing the difference between the wanted signal s and the noise n at the input (Fig. 6a) and at the output (Fig. 6b) of the comb filter 8. Fig. 7 shows the corresponding BER curves for the direct sequence pulse position modulation DS-PPM according to the invention with correlation detection (cor) and energy detection (ED) with (N = 63) and without comb filter (N = 1). The SNR improvement is clearly demonstrated. With the example of N = 63 chips per symbol, the BER performance is improved by 18 dB.

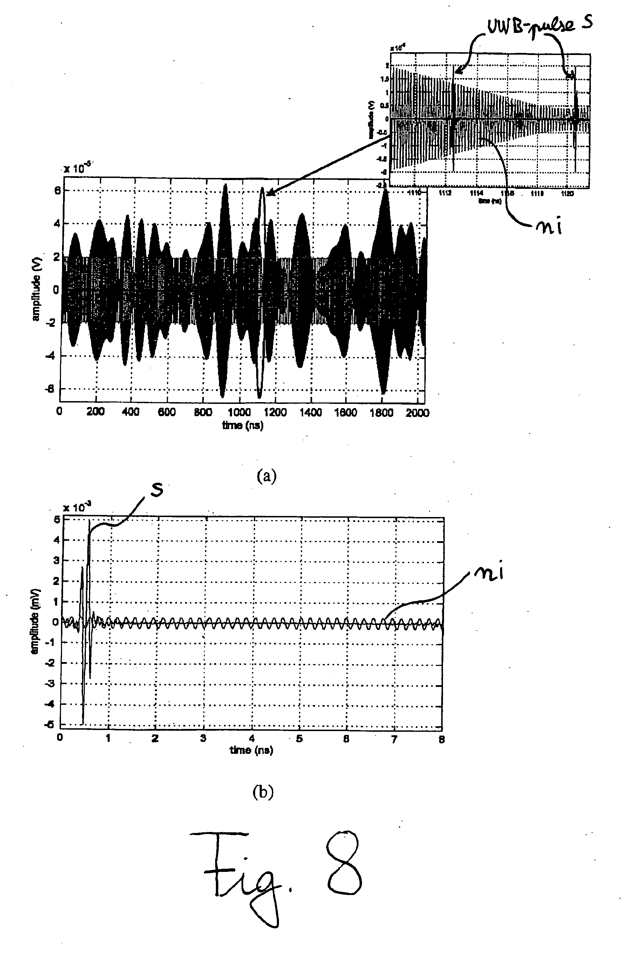

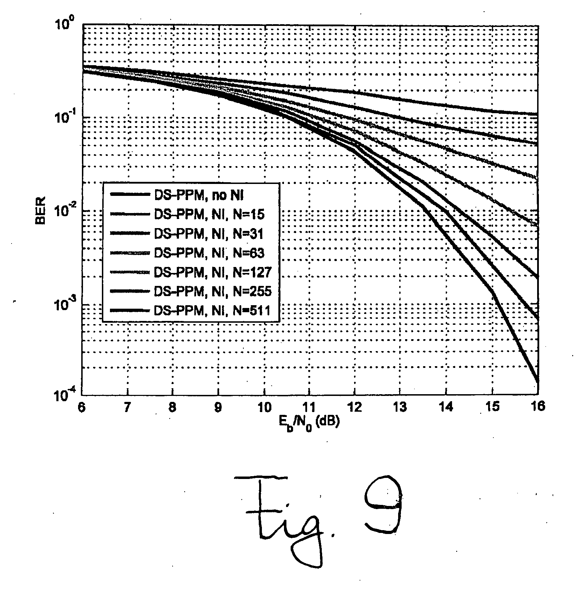

The suppression of narrow-band interference is demonstrated in a similar way in Figs. 8 and 9. Fig. 8: wanted signal s and narrow-band interference ni at the input (Fig. 8a) and at the output (Fig. 8b) of the comb filter. Fig. 9 illustrates how the suppression of the narrow-band interference becomes better with an increasing number of chips per symbol interval by depicting the BER for the DS-PPM according to the invention on an additive white Gaussian noise channel with additional narrow-band interference (NI). N is the number of chips per symbol (reference: no NI).

In the present approach with energy detection 9a, always a processing gain of 10 log₁₀(N) dB is attained because all impulse responses in N chip intervals are summed up algebraically (with the comb filter 8), and this is independent of the multipath propagation on the channel.

Narrow-band interference, which is a major problem for the energy detection, is suppressed by the comb filter 8. Additionally, this comb filter suppresses the interference from other, unwanted transmitters/users.

A further advantage is that whole channel impulse response is available with the same processing gain of 10 log₁₀(N) dB for other applications, i.e. sensing and imaging.

In the example described above, the loop gain in the comb filter 8 is designed to be 1 (or as close as possible to 1) in order to maximize the processing gain. Additionally, the loop is reset periodically after N chip intervals. Each transmitted impulse is convolved with the channel impulse response and on the receiving side, finally, a corresponding overall impulse response results for each chip interval. N of those new overall responses are summed up in the comb filter 8 with the result that the SNR or SIR is improved by the abovementioned factor in dB. This holds for all transmitted waveforms. The correlation properties of the spreading sequence are important in case of multiple transmitters/users. To avoid crosstalk (and corresponding performance degradations), the cross correlation must be as small as possible.

In the above-described specific example, 2-PPM has been used as the modulation scheme. However, obviously, also M-PPM with M > 2 can be used. Then, the chip interval T_{c} must be divided into M subintervals in time and in the receiver, an energy detector with M integrators must be used (M successive energy detections).

However, it is also possible to use PAM instead of PPM. Then, one waveform/pulse train form with different positive weighting (amplitude) factors must be used (the weighting amplitude factors must be positive if energy detection is used). The rest of the transmitter remains the same. In the receiver, only one energy detector (one integrator) is needed after the comb filter, but then a threshold calculation is required for the different amplitude levels.

Finally, also TR schemes can be used. In this case, both the pilot impulse and the information-carrying impulse must be multiplied with the spreading sequence. At the receiver, a correlation detection can be used after the comb filter.

## Claims

1. A transmitter for generating a pulse train and for transmitting said pulse train, the transmitter being adapted
to generate (1) the pulse train,
to modulate (2) the pulse train with respect to the amplitude and/or position of its individual impulses,
to spread (3), preferably to multiply, the pulse train with a predefined spreading sequence (3a),
to shape (4) the individual impulses of the pulse train so that they have a frequency spectrum in a predefined frequency range and/or a frequency spectrum fulfilling a predefined spectral mask, and
to transmit (5) the generated, modulated, spread and shaped pulse train to a receiver,
wherein the transmitter is adapted to generate and to transmit, seen in time domain, the individual impulses of the pulse train with an impulse duration which is shorter than the chip interval, the chip interval being the reciprocal of the chip rate, the latter being the number of impulses per second in the pulse train.

2. A transmitter according to the preceding claim,
***characterized by***
an impulse generator and modulator (1, 2) adapted to generate a pulse train and to modulate said generated pulse train with respect to the amplitude, position and/or phase of its individual impulses and/or to modulate an input waveform with respect to its amplitude and/or position and to generate a pulse train thereof,
a spreading device (3), preferably a multiplier, adapted to spread, preferably to multiply, said pulse train with the predefined spreading sequence (3a),
an impulse shaper (4) adapted to shape the individual impulses of said pulse train so that they have a frequency spectrum in the predefined frequency range and/or a frequency spectrum fulfilling the predefined spectral mask, and
a transmitting unit (5), preferably an antenna, adapted to transmit the generated, modulated, spread and shaped pulse train in the predefined frequency range and/or spectral mask.

3. A transmitter according to one of the preceding claims,
***characterized by***
a pulse amplitude modulation PAM, a pulse position modulation PPM and/or a transmitted reference modulation TR of the pulse train
and/or
a direct sequence spread sprectrum modulation of the pulse train in which a data symbol waveform comprises a predefined number of consecutive individual impulses with one impulse per chip interval, in which the individual impulse of each chip interval is shifted in time according to the data symbol and in which each chip interval or each individual impulse, respectively, is weighted by a value of the predefined spreading sequence.

4. A transmitter according to the preceding claim,
***characterized by***
an M-ary pulse position modulation M-PPM (M ≥ 2) of the pulse train with M different pulse train forms or M different waveforms, respectively, preferably a binary pulse position modulation 2-PPM with one waveform corresponding to an information bit of 0 and the other to an information bit of 1, wherein preferably the M waveforms only differ in the time shifts of the individual impulses of their pulse trains
and/or
a pulse amplitude modulation PAM in which one pulse train form or waveform, respectively, with varying positive amplitude weighting factors is used
and/or
a transmitted reference modulation TR in which the pilot impulses as well as the information carrying impulses are spread with the predefined spreading sequence.

5. A transmitter according to one of the preceding claims,
***characterized in that***
the chip interval length equals at least a predefined multipath propagation delay value corresponding to a maximum duration to be expected for the multipath propagation delay in a transmission and reception system using the transmitter or to the maximum channel impulse response duration, respectively,
wherein preferably, for TR or for 2-PPM, the chip interval length equals at least twice of said predefined multipath propagation delay value and, for M-PPM, the chip interval length equals at least M times of said predefined multipath propagation delay value.

6. A receiver for receiving a pulse train transmitted by a transmitter, the receiver being adapted
to receive (6) a pulse train whose individual impulses have a frequency spectrum in a predefined frequency range and/or a frequency spectrum fulfilling a predefined spectral mask,
to despread (7), preferably to multiply, the received pulse train with a predefined spreading sequence (7a),
to delay and to sum up (8) multiple individual impulses of the despread pulse train and to detect (9) the signal resulting from the addition of the individual impulses.

7. A receiver according to the preceding claim,
***characterized by***
a comb filter (8) comprising a delay feedback loop (8a) and an adder (8b) for delaying and summing up the multiple individual impulses of the despread pulse train
and/or
in that the receiver is adapted to delay and to sum up (8) a predefined number of consecutive individual impulses constituting a data symbol waveform with one individual impulse per chip interval, wherein consecutive individual pulses of the data symbol waveform are delayed so that they are constructively superimposed during the summing up.

8. A receiver according to the preceding claim,
***characterized in that***
the delay feedback loop and the adder have a loop gain of 1 and/or have a loop delay equal to the duration of one chip interval
and/or
**in that** the delay feedback loop and the adder are adapted to start and/or to stop loops at the end and/or at the beginning of data symbol intervals.

9. A receiver according to the preceding claim,
***characterized by***
a clock being synchronized with data symbol intervals at the transmitter and starting and/or ending the loops at the end and/or at the beginning of the data symbol intervals, wherein preferably the starting and/or the stopping is accomplished by blocking a feedback signal in the first chip interval of the data symbol intervals.

10. A receiver according to one of the preceding receiver claims,
***characterized by***
a receiving unit (6), preferably an antenna, adapted to receive the pulse train from the transmitter in the predefined frequency range and/or spectral mask,
a spreading unit (7) connected with its input side to the output side of the receiving unit and being adapted to spread the pulse train with the predefined spreading sequence,
a comb filter (8) connected with its input side to the output side of the spreading unit and comprising a delay feedback loop (8a) and an adder (8b) for delaying and summing up the multiple individual impulses of the despread pulse train and
a detecting unit (9) connected with its input side to the output side of the comb filter (8) and adapted to detect (9) the signal resulting from the addition of the individual impulses.

11. A receiver according to the preceding claim,
***characterized by***
a low noise amplifier (10) connected with its input side to the output side of the receiving unit and connected with its output side to the input side of the spreading unit.

12. A receiver according to one of the preceding receiver claims,
***characterized by***
an energy detector (9a) or a correlation detector (9b) adapted to detect (9) the signal resulting from the addition of the individual impulses.

13. A receiver according to the preceding claim,
***characterized in that***
the energy detector (9a) comprises
- a squaring unit (11) adapted to square an input signal,
- an integrator adapted to integrate a signal over a defined time interval, preferably multiple integrators (12a, 12b) adapted to integrate signals over predefined, consecutive time intervals, wherein preferably the signal(s) to be integrated is a/are squared signal(s) or squared signal sections provided by the squaring unit, and/or
- a deciding unit (13) adapted to compare signals, preferably signals or signal sections integrated over different time intervals and provided by the multiple integrators
and/or
**in that** the energy detector (9a) is adapted to divide chip intervals each comprising one individual impulse in M subintervals (M ≥ 2) and to subsequently perform an energy detection by comparing the accumulated energy within each of said subintervals.

14. A transmission and reception system
***characterized by***
comprising at least one transmitter according to one of the preceding transmitter claims, preferably multiple transmitters with different predefined spreading sequences, and at least one receiver according to one of the preceding receiver claims, wherein the predefined spreading sequence (3a) in the transmitter and the predefined spreading sequence (7a) in the receiver are identical.

15. A transmitter, a receiver and/or a transmission and reception system according to one of the preceding claims
***characterized in that***
the predefined frequency range corresponds to a UWB frequency band, preferably a frequency band in the range between 3.1 GHz and 10.6 GHz and/or between 6 GHz and 8.5 GHz,
and/or
**in that** the predefined spectral mask is a predefined UWB mask, preferably a frequency mask which is defined by setting predefined maximum allowed mean transmission intensities in the range between 3.1 GHz and 10.6 GHz and/or between 6 GHz and 8.5 GHz.

16. A transmitting and receiving method,
wherein on the transmission side
- a pulse train is generated (1),
- the pulse train is modulated (2) with respect to the amplitude, position and/or phase of its individual impulses,
- the pulse train is spread (3), preferably is multiplied, with a predefined spreading sequence (3a),
- the individual impulses of the pulse train are shaped (4) so that they have a frequency spectrum in a predefined frequency range and/or a frequency spectrum fulfilling a predefined spectral mask, and
- the generated, modulated, spread and shaped pulse train is transmitted (5),
wherein, seen in time domain, the individual impulses of the pulse train are generated and transmitted with an impulse duration which is shorter than the chip interval, the chip interval being the reciprocal of the chip rate, the latter being the number of impulses per second in the pulse train; and
wherein on the reception side
- the pulse train is received (6),
- the received pulse train is despread (7), preferably multiplied, with a predefined spreading sequence (7a),
- multiple individual impulses of the despread pulse train are delayed and summed up (8), and
- the signal resulting from the addition of the individual impulses is detected (9).

17. A transmitting and receiving method according to the preceding claim
***characterized in that***
a transmitter, a receiver and/or a transmission and reception system according to one of claims 1 to 15 is used to transmit and/or to receive the impulse train.
